# EUROPEAN PATENT SPECIFICATION

(11) **EP 4 206 506 B1**
(45) Date of publication and mention of the grant of the patent: **25.12.2024**
(21) Application number: 22209255.3
(22) Date of filing: 24.11.2022
(51) Int. Cl.: F16K 27/02, F16K 31/06, F16K 31/40

(54) **ELECTRIC DRIVE VALVE**
ELEKTRISCHES STEUERVENTIL
SOUPAPE D'ENTRAÎNEMENT ÉLECTRIQUE

(30) Priority: 28.12.2021 JP 2021214332
(43) Date of publication of application: 05.07.2023
(73) Proprietor: Fujikoki Corporation, Tokyo 158-0082 (JP)
(72) Inventor: WATARI, Daisuke, Tokyo, 158-0082 (JP); KOJIMA, Masashi, Tokyo, 158-0082 (JP)
(74) Representative: Ter Meer Steinmeister & Partner

(56) References cited:
- EP-A1- 3 018 434
- EP-A1- 3 421 848
- WO-A1-2014/067521
- CN-A- 113 719 654
- DE-A1- 19 635 691
- DE-A1- 2 336 927
- JP-A- H10 267 470
- US-A- 4 993 684
- US-B1- 6 189 985

## Description

### TECHNICAL FIELD

The present invention relates to an electric drive valve such as a solenoid valve which can be used for a refrigeration cycle equipment, and more particularly to an electric drive valve in which a valve main body is formed by a hollow extruded material.

### BACKGROUND ART

An electric drive valve such as a solenoid valve opening and closing a valve with the use of an actuator has been conventionally used in a refrigeration cycle system which is provided with a refrigerant cycle, for example, an air conditioner, a refrigeration device and a freezing device.

Further, as the electric drive valve mentioned above, a pilot type solenoid valve controlling a main valve body opening and closing a flow channel for a refrigerant with a small pilot valve has been used, in particular in a case where a large-diameter valve is required.

Further, the following patent literature 1 is provided as a literature which discloses an invention in which a valve main body is formed according to a hollow extrusion molding.

Similar electric drive valves are disclosed by U.S. 4,993,684 A, WO 2014/067521 A1, EP 3 421 848 A1, EP 3 018 434 A1 and U.S. 6,189,985 B1.

### CITATION LIST

### PATENT LITERATURE

Patent Literature 1: Japanese Unexamined Patent Publication No. H 10-267470

### SUMMARY OF INVENTION

### TECHNICAL PROBLEM

However, the invention described in the patent literature 1 mentioned above relates to an expansion valve, and can not be directly applied to manufacturing of an electric drive valve.

Therefore, an object of the present invention exists in a point of manufacturing cost reduction of an electric drive valve by enabling reduction of a used amount in a material forming a valve main body.

### SOLUTION TO PROBLEM

In order to solve the problem mentioned above and achieve the object, an electric drive valve according to the present invention comprises the features of claim 1. Preferred embodiments of the invention are defined in the subclaims. An electric drive valve according to the present invention includes a valve main body which has a valve chamber in an inner portion thereof, a first flow channel port which is formed in the valve main body and communicates with the valve chamber, a second flow channel port which is formed in the valve main body and communicates with the valve chamber, a valve port which has a valve seat and is disposed between the second flow channel port and the valve chamber in such a manner as to be open to the valve chamber, a valve body which moves in a direction of a center axis, and an actuator which drives the valve body, and the valve main body is formed by a hollow extruded material which has a through hole extending in an axial direction. Further, in the electric drive valve, a center axis of the second flow channel port is consistent with a center axis of the through hole.

In the electric drive valve according to the present invention, the valve main body is formed by the hollow extruded material having the through hole. Therefore, a used amount of the material can be reduced and a manufacturing cost can be reduced at an amount that the portion of the through hole is hollow, in comparison with the conventional electric drive valve in which the valve main body is cut out of a raw material block (block-like raw material lump) according to a cutting work. Further, even in a case where a planar portion mentioned later is disposed in an outer peripheral surface of the valve main body, a working process for forming the planar portion can be omitted by forming the valve main body with the extruded material, and a used amount of the material can be reduced in comparison with a case where the planar portion is formed from a columnar raw material block according to the cutting work.

The material constructing the valve main body is an aluminum alloy. However, the material is not necessarily limited to the aluminum alloy, but the valve main body can be formed by the other material in the present invention. An effect of reduced manufacturing cost on the basis of reduced material usage can be also obtained in the same manner even in the other constructing material.

Further, in the electric drive valve according to the present invention, the valve seat is preferably formed in an inner peripheral surface portion of the through hole with the use of the through hole. This is for the purpose of applying a high durability to the valve seat which repeatedly contacts with and separates from the valve body. More specifically, a mechanical strength is generally enlarged in an outer peripheral surface portion and an inner peripheral surface portion of the hollow extruded material since a metal crystal grain is refined in the outer peripheral surface portion and the inner peripheral surface portion of the hollow extruded material due to a shear stress caused by friction between a raw material metal flowing in metal mold and a metal mold surface when molding. Therefore, the durability of the valve seat can be improved by forming the valve seat in the inner peripheral surface portion.

Further, the electric drive valve according to the present invention is a cartridge type electric drive valve fixed to a housing member (which may be also called simply as "housing") by inserting the valve main body into a valve fixing hole formed in the housing member which includes an inflow channel for refrigerant and an outflow channel for refrigerant. According to an aspect of the present invention, an outer peripheral surface of an upper end portion of the valve main body is provided with a pair of planar portions which are parallel to a center axis of the valve main body and expand in parallel to each other.

According to the aspect mentioned above, the electric drive valve can be gripped in such a manner as to hold the pair of planar portions therebetween when attaching the electric drive valve to the housing member, and an attaching work of the electric drive valve to the housing member can be easily performed. In particular, in a case of adopting a structure that the electric drive valve is fixed by forming a female screw on an inner peripheral surface of the valve fixing hole, forming a male screw engaging with the female screw on an outer peripheral surface of the valve main body, and screwing the valve main body to the valve fixing hole of the housing member, a fastening work can be achieved by holding the pair of planar portions therebetween in such a manner as to fasten a bolt with a wrench and screwing the electric drive valve to the housing member (the valve fixing hole) on the basis of the provision of the pair of planar portions as mentioned above.

Further, in the present invention, any one of the first flow channel port and the second flow channel port forms an inflow port which allows the refrigerant to flow into the valve chamber (is communicated with the inflow channel of the housing member in a case of the cartridge type electric drive valve as mentioned above), and the other forms an outflow port which allows the refrigerant to flow out of the valve chamber (is communicated with the outflow channel of the housing member in a case of the cartridge type electric drive valve as mentioned above).

Further, in the aspect including the pair of planar portions, the valve main body may be provided in a side surface portion of the valve main body with two openings which are communicated with the valve chamber and can form the first flow channel port, one of these two openings may be adapted to be arranged directly under one of the pair of planar portions, and the other of these two openings may be adapted to be arranged directly under the other of the pair of planar portions. This is because of convenience when the electric drive valve is attached to the housing member.

In particular, in the cartridge type electric drive valve, the valve main body (a lower portion or an intermediate portion of the valve main body) fitted to the valve fixing hole of the housing member is provided with the flow channel port (one of the first flow channel port and the second flow channel port) which is communicated with the inflow channel (the flow channel opening open to the valve fixing hole) of the housing member, and the flow channel port (the other of the first flow channel port and the second flow channel port) which is communicated with the outflow channel (the flow channel opening open to the valve fixing hole) of the housing member. However, these flow channel ports are hard to be visually confirmed after the valve main body is inserted into the valve fixing hole.

Particularly, in a case where the flow channel port is disposed in the side surface of the valve main body (in this case, the flow channel opening in the housing side to be communicated is also formed in a side surface (an inner peripheral surface) of the valve fixing hole), the flow channel port (the side surface flow channel port) formed on the side surface of the valve main body moves in a peripheral direction along the outer peripheral surface of the valve main body by rotating the electric drive valve around an axis. Therefore, it is not necessarily easy to make the flow channel port confront with the flow channel opening in the housing side and accurately communicate the flow channel port with the flow channel opening.

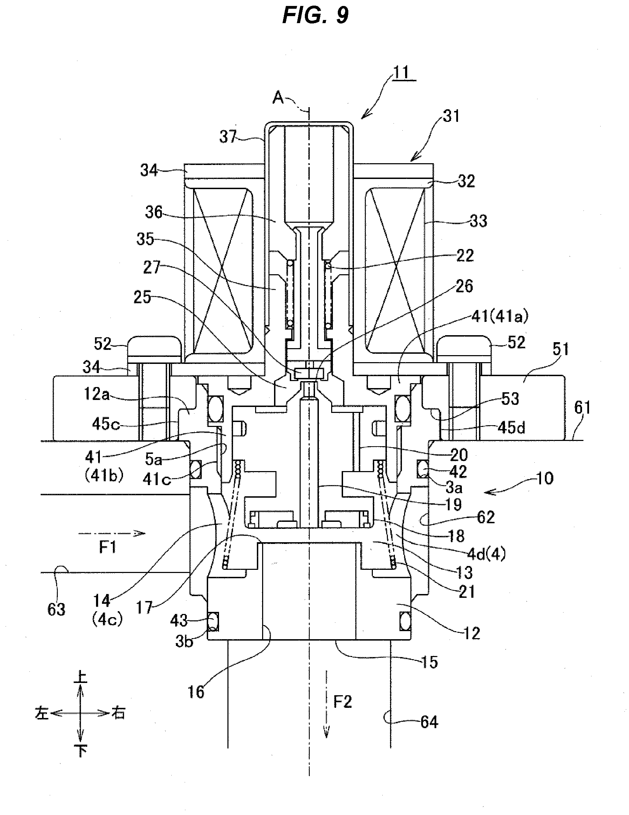

Therefore, in the aspect mentioned above according to the present invention, a position of the flow channel port (the opening) can be adapted to be known on the basis of the planar portion which is easy to be visually confirmed after fitting the valve main body to the valve fixing hole, by forming the flow channel port (the opening which can be used as the first flow channel port or the second flow channel port) just below the planar portion formed in the upper end portion of the valve main body, in other words, by conforming the formed position of the planar portion to the formed position of the flow channel port with respect to the position of the valve main body as seen from the axial direction. This configuration particularly has an effect by a configuration in which the cartridge type electric drive valve and the housing member are fixed according to the other methods than the screwing method as mentioned above (for example, a configuration using a fixing plate 51 in Fig. 9).

Thus, it is possible to accurately attach the electric drive valve to the housing member, that is, to attach the electric drive valve to the housing member in such a manner that the flow channel port of the electric drive valve and the flow channel of the housing member confront with each other without being misaligned in a peripheral direction and are completely communicated with each other, so that it is possible to improve a workability when attaching the electric drive valve. When fitting to the valve fixing hole of the housing member, the upper end portion of the valve main body may protrude out of the valve fixing hole and the planar portion may be exposed from the valve fixing hole, or a whole of the valve main body may be fixed to the valve fixing hole (in this case, the planar portion is also accommodated within the valve fixing hole, however, the planar portion can be visually confirmed from the upper surface of the valve fixing hole).

Further, in a case where the flow channel port is disposed in a bottom surface of the valve main body, the center axis of the valve main body is preferably adapted to coincide with the center axis of the valve fixing hole in the flow channel port (the bottom surface flow channel port), and the flow channel opening in the housing side is preferably adapted to be formed in the center portion of the valve fixing hole as well as arranging the flow channel port in the center portion of the bottom surface of the valve main body. According to the configuration as mentioned above, the flow channel port in the electric drive valve side and the flow channel opening in the housing side are not relatively misaligned even if the valve main body is rotated around the center axis, and both elements (the flow channel port in the electric drive valve side and the flow channel opening in the housing side) can be communicated only by inserting the valve main body into the valve fixing hole.

The number of the planar portions are not limited to one set, but two or more sets of planar portions may be provided. For example, in a case where two sets of planar portions are provided, an outer peripheral surface of an upper end portion of the valve main body may be provided further with the other one pair of planar portions which are parallel to a center axis of the valve main body, expand in parallel to each other and are orthogonal to the pair of planar portions.

Further, in a case where the other one pair of planar portions are further provided as mentioned above, the valve main body is preferably provided in a side surface portion of the valve main body with four openings which can communicate with the valve chamber and can be formed as the first flow channel port or the second flow channel port, a first opening among these four openings is preferably arranged directly under one of a pair of planar portions, a second opening among these four openings is preferably arranged directly under the other of the pair of planar portions, a third opening among these four openings is preferably arranged directly under one of the other pair of planar portions, and a fourth opening among these four openings is preferably arranged directly under the other of the other pair of planar portions.

This is because the position of the opening can be known on the basis of the position of the planar portion in the same manner as the case where the one set (one pair) of planar portions are provided. Further, according to the aspect that four openings are provided as mentioned above, the flow channel port (the opening) of the valve main body can be better confronted with the flow channel opening in the housing side in a case where a screwing type fixing configuration such as a second embodiment mentioned later is employed. More specifically, in the case of the screwing type fixing configuration, the position of the opening moves not only in the peripheral direction but also in the axial direction by rotating the valve main body (goes toward the bottom surface of the valve fixing hole by screwing the valve main body into the valve fixing hole). However, the more the number of the openings disposed in the peripheral direction is, the more finely the relative position between the opening and the flow channel opening in the axis direction can be adjusted, so that the flow channel port (the opening) of the valve main body can be arranged with respect to the flow channel opening in the housing side without any misalignment in the axial direction (or with a little misalignment).

The electric drive valve according to the present invention or each of the aspects may be a pilot type electric drive valve including a pilot valve which is interposed between the valve body and the actuator. In this case, the valve body is driven by the actuator via the pilot valve.

The pilot type electric drive valve may be a cartridge type electric drive valve fixed to a housing member by inserting the valve main body into a valve fixing hole formed in the housing member which is provided with an inflow channel for the refrigerant and an outflow channel for the refrigerant. In this case, an outer peripheral surface of an upper end portion of the valve main body is provided with a pair of planar portions which are parallel to a center axis of the valve main body and expand in parallel to each other, the first flow channel port is an inflow port which is formed in a side surface portion of the valve main body and just below any one of the pair of planar portions, and allows the refrigerant to flow into the valve chamber, the second flow channel port is an outflow port which is formed in a bottom surface portion of the valve main body and allows the refrigerant to flow out of the valve chamber, and the valve port is formed between the second flow channel port and the valve chamber.

Further, in the pilot type electric drive valve mentioned above, the valve main body may be provided in a side surface portion of the valve main body with at least two openings which communicate with the valve chamber and can be formed as the first flow channel port, one of these two openings may be arranged just below one of the pair of planar portions, and the other of these two openings may be arranged directly under the other of the pair of planar portions. The purpose for disposing a pair of planar portions and the purpose for arranging the opening disposed in the side surface portion of the valve main body directly under the planar portion are as already mentioned.

### EFFECT OF INVENTION

According to the present invention, the manufacturing cost of the electric drive valve can be reduced by reducing the used amount of the material for forming the valve main body and the working man hour.

The other objects, features and advantages of the present invention are made apparent by the following description of embodiments of the present invention described on the basis of the accompanying drawings. In the drawings, same reference numerals denote the same or corresponding portions.

### BRIEF DESCRIPTION OF DRAWINGS

Fig. 1 is a plan view showing a manufacturing process of a valve main body (a hollow extruded material constructing a valve main body) which is used in an electric drive valve (a solenoid valve) according to an embodiment of the present invention.
Fig. 2 is a vertical cross sectional view (a cross sectional view as seen from an arrow X-X in Fig. 1) showing the manufacturing process of the valve main body (the hollow extruded material constructing the valve main body) which is used in the solenoid valve according to the embodiment.
Fig. 3 is a vertical cross sectional view showing the manufacturing process of the valve main body used in the solenoid valve according to the embodiment (a step of cutting the hollow extruded material).
Fig. 4 is a vertical cross sectional view showing the manufacturing process of the valve main body used in the solenoid valve according to the embodiment (a state in which the hollow extruded material is cut).
Fig. 5 is a plan view showing the manufacturing process of the valve main body used in the solenoid valve according to the embodiment (a state in which the hollow extruded material is cut).
Fig. 6 is a vertical cross sectional view showing the manufacturing process of the valve main body used in the solenoid valve according to the embodiment (a state in which an opening is pierced and threaded with respect to the cut hollow extruded material).
Fig. 7 is a plan view showing the manufacturing process of the valve main body used in the solenoid valve according to the embodiment (a state in which the opening is pierced and threaded with respect to the cut hollow extruded material).
Fig. 8 is a plan view showing the other configuration example of the valve main body used in the solenoid according to the embodiment.
Fig. 9 is a vertical cross sectional view showing a solenoid valve (a valve opened state and when not being energized) according to a first embodiment of the present invention.
Fig. 10 is a side elevational view showing the solenoid valve (a state before being attached to a housing member and a state in which a coil is not fixed thereto) according to the first embodiment.
Fig. 11 is an upper horizontal cross sectional view showing a valve main body of the solenoid valve according to the first embodiment (a cross sectional view as seen from an arrow X1-X1 in Fig. 10 and a connecting member and a main valve body are not shown).
Fig. 12 is a vertical cross sectional view showing a solenoid valve (a valve opened state and when not being energized) according to a second embodiment of the present invention.
Fig. 13 is a side elevational view showing the solenoid valve (the valve opened state and when not being energized) according to the second embodiment (a housing member is shown to be notches so that a valve main body screwed into a valve fixing hole is visible).

### DESCRIPTION OF EMBODIMENTS

A description will be given below of an electric drive valve (a solenoid valve) according to an embodiment of the present invention. First of all, a description will be given of a valve main body used in the solenoid valve along the lines of a manufacturing process. Next, a description will be given of the solenoid valve using the valve main body as first and second embodiments. The valve main body mentioned below is used in the solenoid valve according to the second embodiment. However, the valve main body used in the solenoid valve according to the first embodiment can be manufactured through the similar process.

### [Manufacturing process of valve main body]

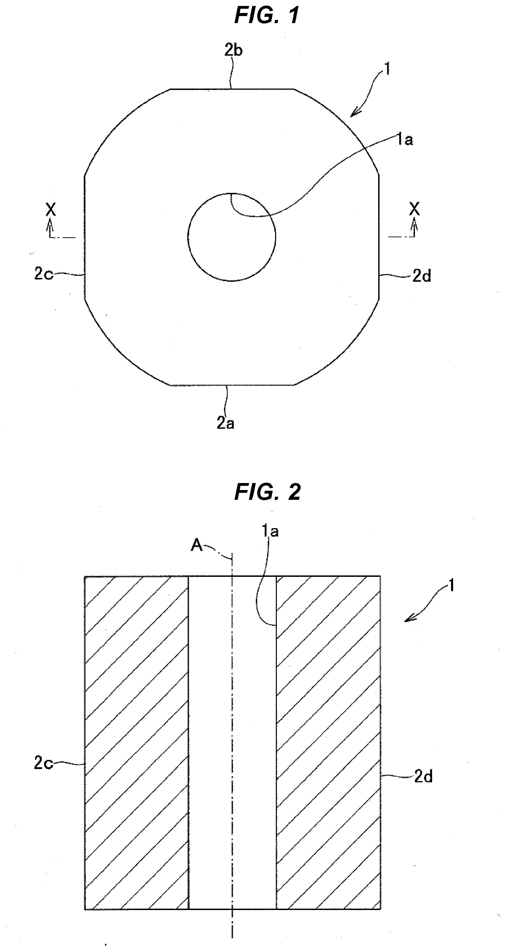

As shown in Figs. 1 and 2, in order to manufacture a valve main body, a hollow extruded material (hereinafter, also refer simply to as "extruded material") 1 having an approximately cylindrical shape is manufactured according to an extrusion molding. The extruded material 1 is made of an aluminum alloy, has in a center portion thereof a through hole 1a extending in a vertical direction (an axial direction), and is provided in an outer peripheral surface thereof with a pair of flat surfaces 2a and 2b which are parallel to a center axis A and expand in parallel to each other, and the other pair of flat surfaces 2c and 2d which are parallel to the center axis A, expand in parallel to each other and are orthogonal to the pair of flat surfaces 2a and 2b.

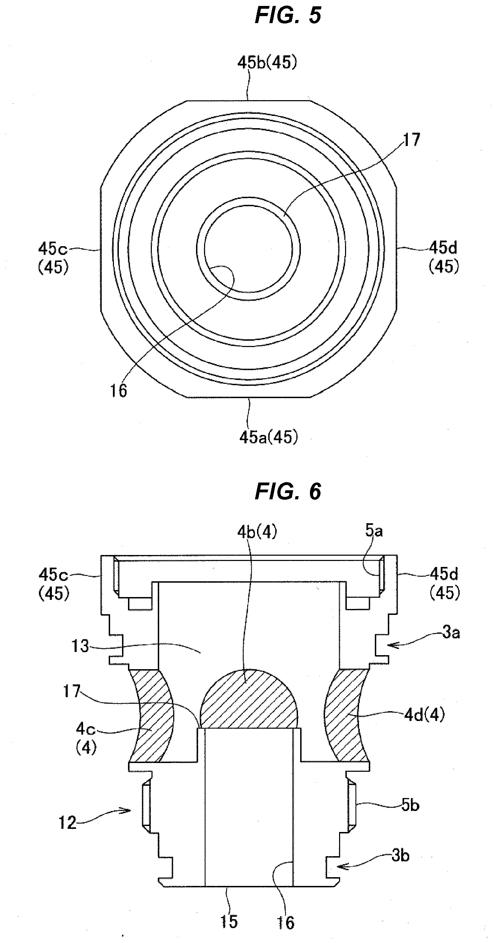

In the present embodiment, the valve main body is manufactured from the extruded material 1 having the shape as mentioned above. Therefore, in comparison with a case where the valve main body is cut out of the columnar raw material block such as the prior art, it is possible to reduce a construction material for the valve main body at such a degree that the through hole 1a and the flat surfaces 2a, 2b, 2c and 2d are formed, and it is possible to reduce a manufacturing cost of the solenoid valve. Further, a part (an upper portion, refer to reference signs 45a, 45b, 45c and 45d in Figs. 5 and 6) of the flat surfaces 2a, 2b, 2c and 2d can be used as the planar portion in the present invention. Therefore, it is possible to omit a step of forming a planar portion according to a cutting work.

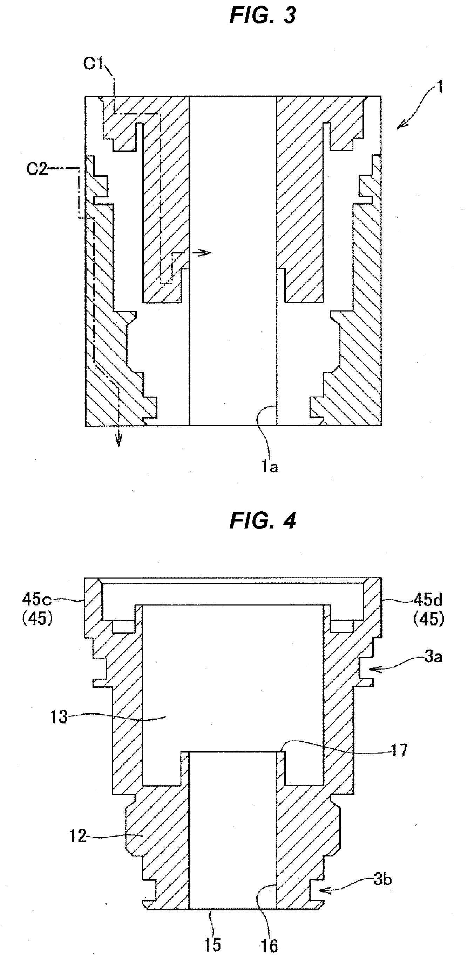

Further, a hole (an opening) is formed by cutting the extruded material 1 from an upper surface side as shown by an arrow C1 in Fig. 3, the hole to which a valve chamber (a main valve chamber) 13 and a connecting member 41 mentioned later are fitted. Further, an outer peripheral surface of a valve main body 12 is formed by cutting the extruded material 1 from a side surface side as shown by an arrow C2 in Fig. 3. In Fig. 3, hatching lines are applied to portions to be formed according to the cutting work.

Figs. 4 and 5 show a state in which the cutting work is finished. As shown in these drawings, a lower portion of the through hole 1a (refer to Fig. 2) is used as a valve port 16 for allowing the refrigerant to flow out of the valve chamber 13, and a valve seat (a main valve seat) 17 is formed in an upper end portion of the valve port 16. As mentioned above, in an inner peripheral surface portion (an inner peripheral surface and a portion near the inner peripheral portion) of the through hole 1a, a metallic crystal is refined and densified by application of a shear stress caused by a friction between a raw material metal flowing within a metal mold and a metal mold surface when molding, and a mechanical strength of the inner peripheral surface portion becomes higher. Therefore, a durability of the valve seat 17 can be improved by forming the valve seat 17 with the use of the portion.

Further, these two sets of flat surfaces (the pair of flat surfaces 2a and 2b and the other pair of flat surfaces 2c and 2d) are cut in their lower portions from their intermediate portions according to the cutting work from the side surface, and are left only in the upper end portion of the valve main body 12 (refer to reference signs 45a, 45b, 45c and 45d). These upper end portions 45a, 45b, 45c and 45d of the remaining flat surfaces are the planar portion in the present invention, and can be used for confirming the positions of the openings 4a, 4b, 4c and 4d (the inflow port 14) when the solenoid valves 11 and 17 are attached to a housing 61 as mentioned later, and fastening the valve main body 12 screwed into a valve fixing hole 62.

Further, grooves 3a and 3b for installing sealing members (an upper O-ring 42 and a lower O-ring 43) are formed in an outer peripheral surface of the valve main body 12.

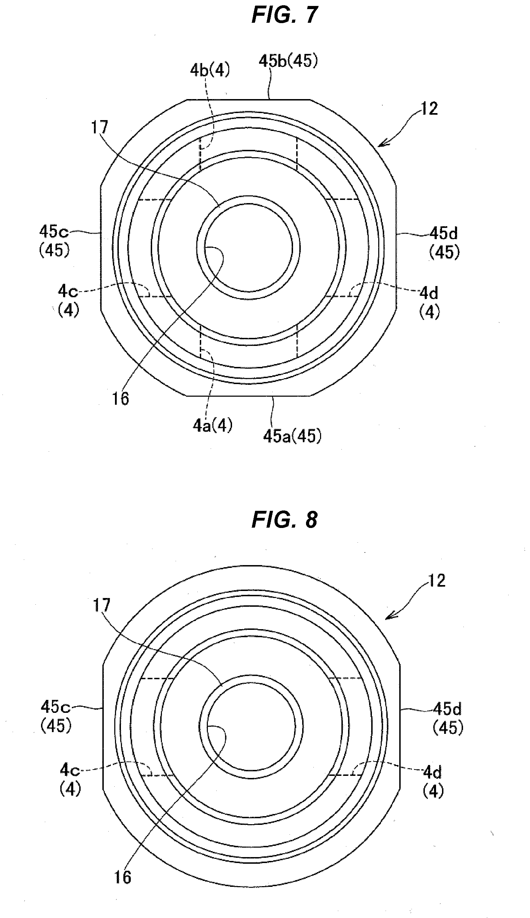

Finally, as shown in Figs. 6 and 7, openings 4a, 4b, 4c and 4d (hatched portions in Fig. 6), a male screw 5b and a female screw 5a are formed, the openings 4a, 4b, 4c and 4d capable of forming the inflow port 14, the male screw 5b provided for screwing into a valve fixing hole 62 of a housing member 61, and the female screw 5a provided for screwing a connecting member 41 connecting an electromagnetic actuator 31 serving as an actuator. A solenoid valve 11 according to a first embodiment mentioned later is fixed to the housing member 61 with the use of a fixing plate 51 without being screwed. Therefore, the male screw 5b in the outer peripheral surface is not necessarily formed in the valve main body 12 which is used in the solenoid valve 11 according to the first embodiment.

Further, four openings 4a, 4b, 4c and 4d are pierced in the valve main body 12, and are formed directly under the four planar portions 45a, 45b, 45c and 45d (in such a manner that the positions of the openings 4a to 4d coincide with the positions of the planar portions 45a to 45d in the peripheral direction). Thus, the positions of the openings 4a to 4d can be confirmed on the basis of the positions of the planar portions 45a to 45d after the lower portion of the valve main body 12 is inserted into the valve fixing hole 62 of the housing 61.

Describing the planar portions 45a to 45d and the openings 4a to 4d differently, in the present embodiment, four planar portions 45a to 45d (same applies to the flat surfaces 2a to 2d) are formed in such a manner that the directions of the adjacent planar portions (perpendicular lines of the planar portions 45a to 45d) form an angle of 90 degrees each other (are orthogonal to each other) (for example, look forward, rearward, leftward and rightward). Four openings 4a to 4d are also formed on the peripheral surface of the valve main body 12 in such a manner that the directions of the adjacent openings (directions of the axes of the openings 4a to 4d) form an angle of 90 degrees each other (are orthogonal to each other) (for example, look forward, rearward, leftward and rightward), in the same manner as the planar portions 45a to 45d. Further, the direction (the position in the peripheral direction of the valve main body 12) of each of the planar portions 45a to 45d is adapted to coincide with the direction (the position in the peripheral direction of the valve main body 12) of each of the openings 4a to 4d.

Only one set of planar portions 45 (a pair of planar portions 45c and 45d) may be provided as shown in Fig. 8. In this case, the opening 4 may be formed directly under each of the planar portions 45 (45c and 45d) one by one (refer to reference signs 4c and 4d), that is, for example, two openings may be totally formed.

A description will be given below of the solenoid valve with the use of the valve main body 12.

### [First Embodiment]

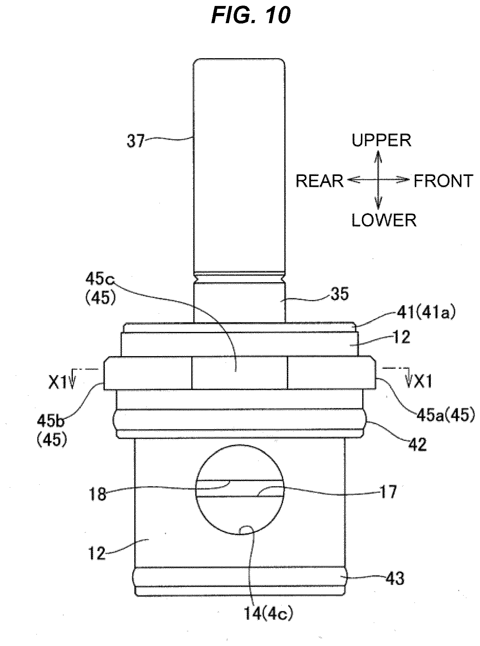

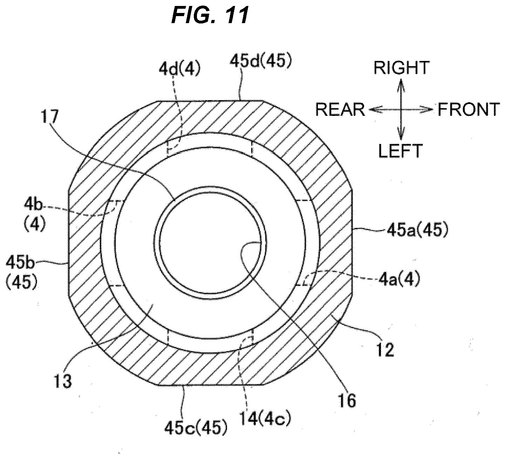

As shown in Figs. 9 to 11, a solenoid valve 11 according a first embodiment of the present invention is provided with a valve portion 10 which opens and closes a flow channel for refrigerant, and an electromagnetic actuator 31 which drive the valve portion 10, is a solenoid valve which controls a refrigerant flow in a refrigeration cycle equipment, for example, a heat pump type heating and cooling system, and is a pilot type solenoid valve which controls a main valve body 18 opening and closing a refrigerant flow channel by a pilot valve. Further, the solenoid valve 11 is a so-called cartridge type solenoid valve which can be embedded in the refrigeration cycle equipment by fixing to a housing member 61 including an inflow channel 63 and an outflow channel 64 for refrigerant, and is a normal open type (normally open type) valve which comes to a valve open state when not being energized.

Each of the drawings shows a two-dimensional coordinate which appropriately represents a longitudinal direction, a lateral direction and a vertical direction and is orthogonal to each other, and the following description will be given on the basis of these directions. However, since the solenoid valve according to the present invention and each of the embodiments can be used in various directions, the directions are provided as a matter of convenience, and do not restrict a configuration of each of portions of the present invention.

The solenoid valve 11 according to the present embodiment has a valve main body 12, an inflow port 14, a valve port 16, a valve seat (a main valve seat) 17, a valve body (a main valve body) 18, a lower coil spring (a compression coil spring) 21 and a connecting member 41 as a valve portion 10 (a main valve). The valve main body 12 is provided in an inner portion thereof with a valve chamber (a main valve chamber) 13 which allows the refrigerant to pass through. The inflow port 14 is pierced in a side surface (a peripheral surface) of the valve main body 12 in such a manner as to allow the refrigerant to flow into the main valve chamber 13. The valve port 16 is provided in a lower end thereof with an outflow port 15 for refrigerant, passes through a bottom surface portion of the valve main body 12 in a vertical direction and forms a discharge channel for discharging the refrigerant from the main valve chamber 13. The main valve seat 17 is formed in an upper end of the valve port 16. The main valve body 18 opens and closes the valve port 16 by moving forward and backward (upward and downward) with respect to the main valve seat 17. The compression coil spring 21 energizes upward the main valve body 18. The connecting member 41 connects the electromagnetic actuator 31 to the valve main body 12.

The valve main body 12 is made of a hollow extruded material, and is manufactured by applying the manufacturing process mentioned above to the extruded material. Therefore, the valve main body 12 is provided in an upper portion thereof with a plurality of (four in the present embodiment and a second embodiment mentioned later) planar portions 45a, 45b, 45c and 45d, and is provided in a valve main body side surface directly under each of the planar portions 45a, 45b, 45c and 45d with a plurality of (totally for in the present embodiment and the second embodiment mentioned later) openings 4a, 4b, 4c and 4d which can be used as the inflow port 14.

The inflow port 14 is one of these four openings 4a, 4b, 4c and 4d. Further, the valve port 16 and the outflow port 15 use the through hole 1a of the hollow extruded material 1, and the main valve seat 17 is formed in an inner peripheral surface portion of the through hole 1a.

The connecting member 41 has a flange portion 41a having a ring shape and a cylinder portion 41b having a cylindrical shape, and is integrally provided with a stator 35 (mentioned later) in an upper surface center portion of the flange portion 41a. The ring-shaped flange portion 41a is arranged in an upper surface portion of the valve main body 12 in such a manner as to close an upper surface opening of the valve main body 12, and has a center hole. The cylindrical cylinder portion 41b extends vertically downward from a lower surface of the flange portion 41a. The cylinder portion 41b is provided in an outer peripheral surface thereof with a male screw 41c engaging with a female screw 5a which is formed in an inner peripheral surface of the upper surface opening of the valve main body 12, and fixes the connecting member 41 to the valve main body 12 by screwing the cylinder portion 41b to the upper surface opening of the valve main body 12. Further, an upper portion of the main valve body 18 is fitted and inserted to the cylinder portion 41b in such a manner as to be slidable in the vertical direction, and an inner upper surface of the cylinder portion 41b forms a stopper surface which stops the main valve body 18 by the contact with the upper surface of the main valve body 18 when opening the valve.

Further, a pilot passage 19 and a pressure equalizing channel 20 are formed in the main valve body 18. The pilot passage 19 passes through in a center portion of the main valve body 18 in a vertical direction and allows the main valve chamber 13 and a pilot chamber 25 (mentioned later) to communicate. The pressure equalizing channel 20 passes through the main valve body 18 in the vertical direction in the same manner and allows the main valve chamber 13 and the pilot chamber 25 to communicate, however, has a smaller diameter than that of the pilot passage 19. The main valve chamber 13 according to the present embodiment is a space between the main valve body 18 and the main valve seat 17 and a space facing the inflow port 14.

A pilot valve is provided between an upper surface of the main valve body 18 and the electromagnetic actuator 31. Specifically, an inner side of a center hole of the flange portion 41a in the connecting member 41 is set to the pilot chamber 25, a pilot valve seat 26 is formed in an upper end (an upper surface center portion of the main valve body 18) of the pilot passage 19 which is open to the pilot chamber 25, and a pilot valve body 27 is provided in such a manner as to come close to and away from the pilot valve seat 26. The pilot valve body 27 is fixed to a lower end of a plunger 36 (mentioned later), and opens and closes the pilot passage 19 by moving up and down together with the plunger 36. The pilot chamber 25 according to the present embodiment is a space which is formed in the upper side of the main valve body 18.

In the meantime, the electromagnetic actuator 31 has a coil 33, a stator 35 and the plunger 36. The coil 33 is formed by applying a winding wire to a bobbin 32. The stator 35 is arranged in an inner side of the coil 33. The plunger 36 is attracted to the stator 35 on the basis of a magnetic force generated by the coil 33. The bobbin 32 is provided in a center portion thereof with a tubular portion, and is arranged within the tubular portion in a state in which the stator 35 and the plunger 36 are housed in a sleeve 37. The sleeve 37 is a bottomless and covered (closed in an upper surface and opened in a lower surface) tubular member, is fixed in a lower end portion thereof to an outer peripheral surface of the stator 35, and forms an enclosed space in an upper surface portion of the valve main body 12 together with the connecting member 41. The plunger 36 is housed in the sleeve 37 in such a manner as to be slidable in a vertical direction, is provided between the plunger 36 and the stator 35 with an upper coil spring (a compression coil spring) 22 which biases upward the plunger 36, and biases the pilot valve body 27 in a valve opening direction.

On the other hand, the housing member 61 is provided with a valve fixing hole 62, an inflow channel 63, and an outflow channel 64. The valve fixing hole 62 can fix the solenoid valve 11. The inflow channel 63 is open to an inner peripheral surface of the valve fixing hole 62. The outflow channel 64 is open to a bottom surface of the valve fixing hole 62. The housing member 61 is attached to the solenoid valve 11 by inserting a lower portion of the valve main body 12 into the valve fixing hole 62 in such a manner that the inflow port 14 (any of the four openings 4a, 4b, 4c and 4d mentioned above) formed in the side surface (the peripheral surface) of the valve main body 12 confronts with an opening portion of the inflow channel 63 to the valve fixing hole 62, and thereafter pressing a flange portion 12a formed in an upper outer peripheral surface of the valve main body 12 against an upper surface of the housing member 61 by means of a fixing plate 51 which is fixed to the upper surface of the housing member 61 by a fixing screw 52.

A step portion 53 engaging with the flange portion 12a of the valve main body 12 is formed in the fixing plate 51, an upward movement of the valve main body 12 is controlled by the step portion 53, and the valve main body 12 is fixed to the housing member 61. Further, the fixing of the coil 33 is simultaneously performed when the fixing plate 51 is fixed. More specifically, the coil 33 is fixed while fitting and inserting the sleeve 37 to the tubular portion of the bobbin 32, and a lower peripheral edge of the coil cover 34 covering the coil 33 is thereafter fixed to the upper surface of the fixing plate 51 by the fixing screw 52.

The outflow port 15 in the bottom surface of the valve main body faces an opening portion to the valve fixing hole 62 of the outflow channel 64 in the housing member 61 by inserting the valve main body 12 into the bottom surface of the valve fixing hole 62, and communicates with the outflow channel 64. Further, by the provision of the sealing members 42 and 43 on the outer peripheral surface of the valve main body 12 in such a manner as to hold the inflow port 14 (each of the openings 4a, 4b, 4c and 4d) in the vertical direction, the sealing is achieved between the outer peripheral surface of the valve main body 12 and the inner peripheral surface of the valve fixing hole 62. More specifically, the upper O-ring 42 is installed within the groove 3a which is formed at the position above the inflow port 14 (each of the openings 4a to 4d), and the lower O-ring 43 is installed within the groove 3b which is formed at the position below the inflow port 14 (each of the openings 4a to 4d). Thus, even if the refrigerant flows out of the openings 4a, 4b and 4d which is not used as the inflow port 14 to an external portion of the valve main body 12 (into the valve fixing hole 62), it is possible to prevent the refrigerant from leaking out of the upper surface of the valve fixing hole 62 or flowing out to the outflow channel 64.

A description will be given below of a motion of the solenoid valve according to the present embodiment.

In the valve open state shown in Fig. 9, the pilot passage 19 is opened, and the high-pressure refrigerant is discharged to the outflow channel 64 through the pilot passage 19 without accumulating within the pilot chamber 25, the high-pressure refrigerant flowing into the main valve chamber 13 from the inflow channel 63 and flowing into the pilot chamber 25 through the pressure equalizing channel 20. Therefore, the pressure within the pilot chamber 25 is not enlarged, the main valve body 18 is pressed against the lower surface of the connecting member 41 (the flange portion 41a) by the biasing force of the lower coil spring 21 biasing the main valve body 18 upward (a valve opening direction), and the valve open state is maintained. Thus, the refrigerant flowing into the main valve chamber 13 from the inflow channel 63 through the inflow port 14 flows out of the outflow port 15 to the outflow channel 64 through the valve port 16 (refer to arrows F1 and F2).

The plunger 36 is sucked to the stator 35 by energizing the coil 33 within the electromagnetic actuator 31. As a result, the plunger 36 moves down against the biasing force of the upper coil spring 22, and allows the pilot valve body 27 to seat on the pilot valve seat 26. Thus, the pilot passage 19 is closed, the refrigerant pressure introduced into the pilot chamber 25 through the pressure equalizing channel 20 is accumulated without being discharged through the pilot passage 19, and the pressure within the pilot chamber 25 rises up. A force for pressing the main valve body 18 downward is generated by the refrigerant pressure within the pilot chamber 25 (accurately, a differential pressure between the pilot chamber 25 and the main valve chamber 13), and a suction force of the stator 35 (a downward force sucking the plunger 36). When the force for pressing the main valve body 18 downward goes beyond the upward biasing force of the lower coil spring 21, the main valve body 18 moves down and seats on the main valve seat 17. Thus, there comes to a valve closed state in which the valve port 16 is closed.

On the other hand, when the energization of the coil 33 stops from the valve closed state, the suction force of the stator 35 disappears and the plunger 36 is released from the stator 35. As a result, the plunger 36 is pushed back upward by the upper coil spring 22, the pilot valve body 27 is disconnected from the pilot valve seat 26 and the pilot passage 19 is released. Then, the refrigerant accumulated within the pilot chamber 25 is discharged to the outflow channel 64 through the pilot passage 19, and the pressure within the pilot chamber 25 is lowered. Further, the differential pressure for pulling the main valve body 18 upward is generated in upper and lower surfaces of the main valve body 18 since a cross sectional area of the pilot passage 19 is greater than that of the pressure equalizing channel 20. In addition, the lower coil spring 21 has a biasing force for pulling the main valve body 18 upward. Thus, the main valve body 18 is pushed up, the main valve body 18 is disconnected and the valve port 16 is released, thereby achieving a valve open state (refer to Fig. 1) in which the refrigerant flow channel from the inflow channel 63 to the outflow channel 64 via the main valve chamber 13 is opened.

### [Second Embodiment]

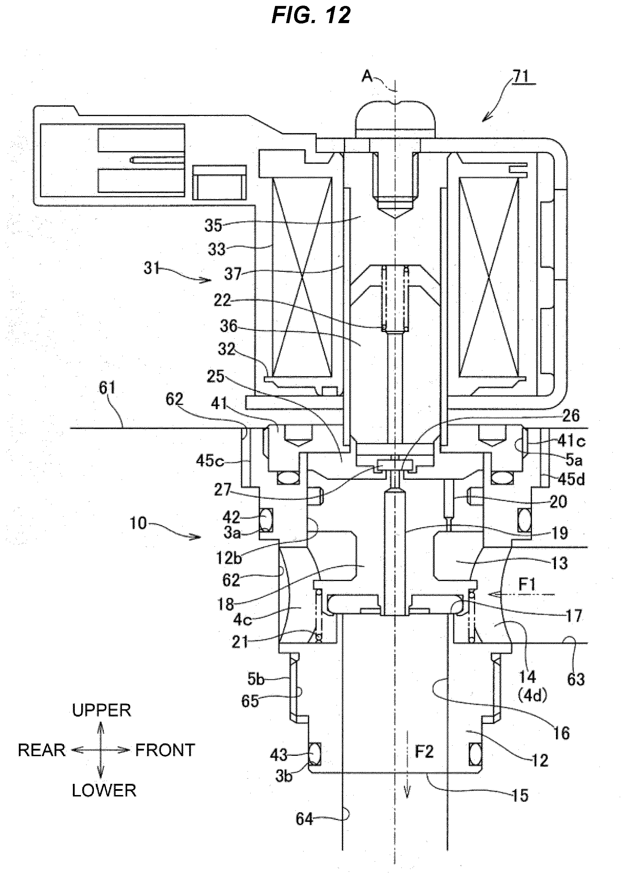

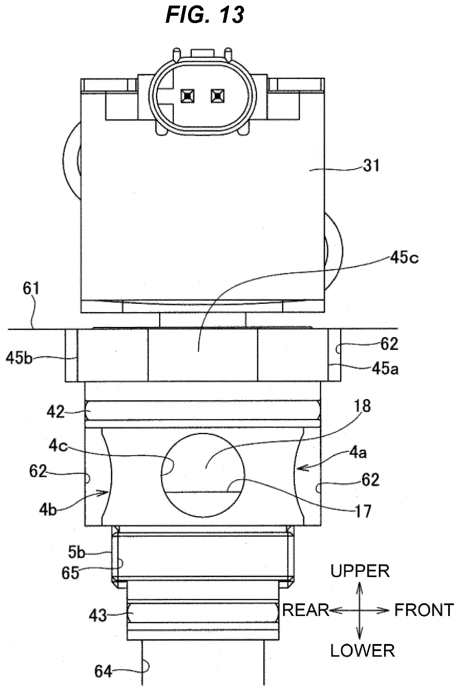

As shown in Figs. 12 and 13, a solenoid valve 71 according to a second embodiment of the present invention is a so-called cartridge type pilot solenoid valve which is attached to the housing member 61 including the inflow channel 63 and the outflow channel 64 for the refrigerant, in the same manner as the first embodiment. However, the solenoid valve 71 is a normal closed type (normally closed type) solenoid valve which comes to a valve closed state when not being energized. In the description of the present embodiment, same reference numerals and signs are attached to the same or corresponding configurations as or to those of the first embodiment, a redundant explanation will be omitted, and a description will be given mainly on different points.

The solenoid valve 71 according to the present embodiment adopts a screwing type fixing configuration as a fixing method to the housing member 61. Specifically, a female screw 65 is formed in an inner peripheral surface of the valve fixing hole 62 of the housing member 61, a male screw 5b engaging with the female screw 65 is disposed in the outer peripheral surface of the valve main body 12, and the solenoid valve 71 can be fixed to the housing member 61 by screwing the valve main body 12 to the valve fixing hole 62.

The valve main body 12 is made of the hollow extruded material 1 mentioned above, is worked according to the processes mentioned with reference to Figs. 1 to 7, and is provided with two sets of planar portions 45a, 45b, 45c and 45d, and the openings 4a, 4b, 4c and 4d pieced directly under the respective planar portions 45a to 45d, one (the opening 4d in the present embodiment) of the openings 4a to 4d being set to the inflow port 14. The planar portions 45a to 45d can be used for confirming the positions of the openings 4a to 4d in the peripheral direction when screwing the valve main body 12 to the valve fixing hole 62 as already mentioned, and can be also used when performing the fastening work.

The valve port 16 and the main valve seat 17 formed by using the through hole 1a are disposed in a bottom surface portion of the valve main body 12, and the main valve body 18 moving up and down with respect to the main valve seat 17 is disposed within the main valve chamber 13. The main valve body 18 is supported in an upper portion thereof by a cylinder portion 12b formed in an upper end portion of the valve main body 12 so as to be slidable in a vertical direction. Further, a lower coil spring 21 biasing the main valve body 18 upward is disposed between a bottom surface of the main valve chamber 13 and the main valve body 18.

A connecting member 41 having a center hole is installed in an upper opening of the valve main body 12 (an upper surface of the cylinder portion 12b). The connecting member 41 is provided in an outer peripheral surface thereof with a male screw 41c which engages with the female screw 5a formed in an inner peripheral surface of the upper opening of the valve main body 12, and is fixed to the valve main body 12 by being screwed to the upper opening of the valve main body 12. Further, a lower end portion of the sleeve 37 is fitted and fixed to the center hole of the connecting member 41.

A pilot chamber 25 is formed in an upper surface of the main valve body 18, and the pilot valve body 27 is arranged within the pilot chamber 25. The pilot valve body 27 is fixed to a lower end portion of the plunger 36 which is slidably housed in a lower portion of the sleeve 37, and moves up and down together with the plunger 36. The pilot valve body 27 opens and closes the pilot passage 19 by coming into contact with and away from (contacting with and disconnecting from) the pilot valve seat 26 which is formed in an upper center portion of the main valve body 18.

Further, the upper surface of the main valve body 18 is protruded in a peripheral edge portion thereof upward. Thus, the peripheral edge portion comes into contact with the lower surface of the connecting member 41 when the main valve body 18 is pushed up by the lower coil spring 21 and moves up, so that the main valve body 18 stops. In a valve opened (fully opened) state corresponding to the stop state (a state in which the main valve body 18 comes into contact with the lower surface of the connecting member 41), the plunger 36 is at the highest position where the plunger 36 is sucked to the stator 35, a fixed gap is formed between the pilot valve body 27 in the lower end of the plunger and the pilot valve seat 26 in the upper center portion of the main valve body, and the pilot passage 19 is opened.

The electromagnetic actuator 31 is provided with a coil 33, a plunger 36 and a stator 35 in the same manner as the first embodiment. The coil 33 is formed by applying the winding wire to the bobbin 32. The plunger 36 and the stator 35 is arranged within the tubular portion in a center portion of the bobbin in a state of being housed in the sleeve 37. In the meantime, in the present embodiment, the sleeve 37 is a bottomless and coverless (closed in both an upper surface and a lower surface) tubular member and is provided with the stator 35 in such a manner as to close the upper surface of the sleeve 37. An upper coil spring 22 biasing the plunger 36 downward is disposed between the plunger 36 and the stator 35 which are housed in the lower portion of the sleeve 37. Further, in the same manner as the first embodiment, an upper O-ring 42 is disposed in an outer peripheral surface of the valve main body above the inflow port 14 (each of the openings 4a to 4d), and a lower O-ring 43 is disposed in the outer peripheral surface of the valve main body below the inflow port 14 (each of the openings 4a to 4d).

A description will be next given of a motion of the solenoid valve according to the present embodiment.

In a valve closed state shown in Fig. 12, the pilot valve body 27 seats on the pilot valve seat 26 and the pilot passage 19 is closed. Therefore, an internal pressure of the pilot chamber 25 communicating with the main valve chamber 13 via the pressure equalizing channel 20 becomes equal to the pressure within the main valve chamber 13. On the other hand, the pressure within the valve port 16 becomes lower than the main valve chamber 13, and the main valve body 18 seats on the main valve seat 17 by the pressure (accurately, the differential pressure between the pilot chamber 25 and the space within the valve port 16), so that the valve closed state is maintained.

When the coil 33 within the electromagnetic actuator 31 is energized, the plunger 36 is sucked to the stator 35. As a result, the plunger 36 moves up against the biasing force of the upper coil spring 22, the pilot valve body 27 is disconnected from the pilot valve seat 26 and the pilot passage 19 is opened. Thus, the refrigerant introduced into the pilot chamber 25 through the pressure equalizing channel 20 is discharged to the outflow channel 64 through the pilot passage 19, and the pressure within the pilot chamber 25 is lowered. Further, the differential pressure pulling up the main valve body 18 is generated in the upper and lower surfaces of the main valve body 18 since a cross sectional area of the pilot passage 19 is greater than that of the pressure equalizing channel 20. In addition, the lower coil spring 21 has a biasing force for pulling up the main valve body 18. Therefore, the main valve body 18 is pushed up, thereby forming a valve opened state in which the valve port 16 is opened. The pushed-up main valve body 18 runs into the lower surface of the connecting member 41 and is stopped. Therefore, the pilot valve seat 26 in the upper center portion of the main valve body does not come into contact with the lower surface of the pilot valve body 27 and the pilot valve is not closed, so that the pilot passage 19 is kept opened.

On the contrary, when the energization of the coil 33 is stopped from this valve opened state, the suction force of the stator 35 disappears and the plunger 36 is disconnected from the stator 35. As a result, the plunger 36 is pushed back downward by the upper coil spring 22, the pilot valve body 27 seats on the pilot valve seat 26 and the pilot passage 19 is closed. Then, the refrigerant flowing into the pilot chamber 25 through the pressure equalizing channel 20 is accumulated within the pilot chamber 25, the pressure within the pilot chamber 25 is increased, and the main valve body 18 is pushed down against the biasing force of the lower coil spring 21 by this pressure (accurately, the differential pressure between the pilot chamber 25 and the main valve chamber 13 facing the inflow port 14) and seats on the main valve seat 17, thereby forming a valve closed state (refer to Fig. 12) in which the valve port 16 is closed.

The embodiments according to the present invention are described above. However, it is apparent for a person skilled in the art that the present invention is not limited to these embodiments, but can be variously modified within the scope of the claims.

For example, all of the solenoid valves according to the embodiments are the pilot type valves. However, the present invention is not limited to the pilot type valve, but can be applied to a direct-acting type valve. Further, all of the solenoid valves according to the embodiments are the cartridge type valves.

Further, the solenoid valve according to the present invention is used in the refrigeration cycle equipment including the refrigerant cycle, typically such as the air conditioner and the freezer and refrigerator. Further, the present invention is not limited to the solenoid valve, but can be applied to an electric drive valve, for example, a motor valve including an actuator moving a valve body with the use of a motor.

### REFERENCE SIGNS LIST

A center axis of hollow extruded material, valve main body and solenoid valve
F1, F2 flow of refrigerant
1 hollow extruded material
1a through hole
2a, 2b, 2c, 2d flat surface
3a, 3b groove installing sealing member (O-ring)
4, 4a, 4b, 4c, 4d opening
5a, 65 female screw
5b, 41cmale screw
10 valve portion
11, 71 solenoid valve
12 valve main body
13 main valve chamber
14 inflow port
15 outflow port
16 valve port
17 main valve seat
18 main valve body
19 pilot passage
20 pressure equalizing channel
21 lower coil spring
22 upper coil spring
25 pilot valve chamber
26 pilot valve seat
27 pilot valve body
31 electromagnetic actuator
32 bobbin
33 coil
3 coil cover
35 stator
36 plunger
37 sleeve
41 connecting member
41a flange portion of connecting member
41b cylinder portion of connecting member
42 sealing member (upper O-ring)
43 sealing member (lower O-ring)
45, 45a, 45b, 45c, 45d planar portion
51 fixing plate
52 fixing screw
53 step portion
61 housing member
62 valve fixing hole
63 inflow channel
64 outflow channel

## Claims

1. An electric drive valve comprising:
a valve main body (12) which has a valve chamber (13) in an inner portion thereof;
a first flow channel port which is formed in the valve main body (12) and communicates with the valve chamber (13);
a second flow channel port which is formed in the valve main body (12) and communicates with the valve chamber (13);
a valve port (16) which has a valve seat (17) and is disposed between the second flow channel port and the valve chamber (13) in such a manner as to be open to the valve chamber (13);
a valve body (18) which moves in a direction of a center axis (A); and
an actuator (31) which drives the valve body (18);
wherein the valve main body (12) is formed by a hollow extruded material of an aluminium alloy which has a through hole (1a) extending in an axial direction of the center axis (A);
**characterized in that**
the electric drive valve is a cartridge type electric drive valve configured to be fixed to a housing member (61) by inserting the valve main body (12) into a valve fixing hole (62) formed in the housing member (61) which is provided with an inflow channel for refrigerant and an outflow channel for refrigerant,
the second flow channel port is an outflow port (15) which is formed in a center of a bottom surface portion of the valve main body (12) and configured to be connected to the outflow channel (64) of the housing member (61), allowing the refrigerant to flow out of the valve chamber (13),
the center axis (A) of the valve main body (12) is adapted to coincide with the center axis (A) of the valve fixing hole (62),
a center axis (A) of the second flow channel port (15) is consistent with a center axis (A) of the through hole (1a),
a lower portion of the through hole (1a) is used as the valve port (16), and
the valve seat (17) is formed in an upper end portion of the valve port (16).

2. The electric drive valve according to claim 1, **characterized in that** an outer peripheral surface of an upper end portion of the valve main body (12) is provided with a pair of planar portions (45a, 45b, 45c and 45d) which are parallel to a center axis (A) of the valve main body (12) and expand in parallel to each other.

3. The electric drive valve according to claim 4, **characterized in that** the valve main body (12) is provided in a side surface portion of the valve main body (12) with two openings which are communicated with the valve chamber (13) and can form the first flow channel port,
one of these two openings is adapted to be arranged directly under one of the pair of planar portions (45a, 45b, 45c and 45d), and
that the other of these two openings is adapted to be arranged directly under the other of the pair of planar portions (45a, 45b, 45c and 45d).

4. The electric drive valve according to claim 2, **characterized in that** an outer peripheral surface of an upper end portion of the valve main body (12) is provided with the other one pair of planar portions (45a, 45b, 45c and 45d) which are parallel to a center axis (A) of the valve main body (12), expand in parallel to each other and are orthogonal to the pair of planar portions (45a, 45b, 45c and 45d).

5. The electric drive valve according to claim 4, **characterized in that** the valve main body (12) is provided in a side surface portion of the valve main body (12) with four openings (4a to 4d) which can communicate with the valve chamber (13) and can be formed as the first flow channel port or the second flow channel port,
a first opening among these four openings (4a to 4d) is arranged just below one of a pair of planar portions (45a, 45b, 45c and 45d),
a second opening among these four openings (4a to 4d) is arranged just below the other of the pair of planar portions (45a, 45b, 45c and 45d),
a third opening among these four openings (4a to 4d) is arranged just below one of the other pair of planar portions (45a, 45b, 45c and 45d), and
a fourth opening among these four openings (4a to 4d) is arranged just below the other of the other pair of planar portions (45a, 45b, 45c and 45d).

6. The electric drive valve according to any one of claims 1 to 5, **characterized in that** the electric drive valve is a pilot type electric drive valve including a pilot valve which is interposed between the valve body (18) and the actuator (31), and
the actuator (31) drives the valve body (18) via the pilot valve.

7. The electric drive valve according to claim 6, **characterized in that** the first flow channel port is an inflow port which is formed in a side surface portion of the valve main body (12) and just below any one of the pair of planar portions (45a, 45b, 45c and 45d) and allows the refrigerant to flow into the valve chamber (13).

8. The electric drive valve according to claim 7, **characterized in that** the valve main body (12) is provided in a side surface portion of the valve main body (12) with at least two openings which communicate with the valve chamber (13) and can be formed as the first flow channel port,
one of these two openings is arranged just below one of the pair of planar portions (45a, 45b, 45c and 45d), and
the other of these two openings is arranged just below the other of the pair of planar portions (45a, 45b, 45c and 45d).

## Patentansprüche

1. Ein elektrisches Antriebsventil, umfassend:
einen Ventilhauptkörper (12), der in seinem Inneren eine Ventilkammer (13) aufweist;
einen ersten Strömungskanalanschluss, der im Ventilhauptkörper (12) ausgebildet ist und mit der Ventilkammer (13) kommuniziert;
einen zweiten Strömungskanalanschluss, der im Ventilhauptkörper (12) ausgebildet ist und mit der Ventilkammer (13) kommuniziert;
einen Ventilanschluss (16), der einen Ventilsitz (17) umfasst und zwischen dem zweiten Strömungskanalanschluss und der Ventilkammer (13) derart angeordnet ist, dass er zur Ventilkammer (13) hin geöffnet ist;
einen Ventilkörper (18), der sich in Richtung der Mittelachse (A) bewegt; und
einen Aktuator (31), der den Ventilkörper (18) antreibt;
wobei der Ventilhauptkörper (12) aus einem hohlen stranggepressten Material einer Aluminiumlegierung ausgebildet ist, das ein Durchgangsloch (la) aufweist, das sich in axialer Richtung der Mittelachse (A) erstreckt;
**dadurch gekennzeichnet, dass**
das elektrische Antriebsventil ein elektrisches Kartuschen-Antriebsventil ist, das eingerichtet ist, durch Einsetzen des Ventilhauptkörpers (12) in ein Ventilbefestigungsloch (62), dass an einem Gehäuseelement (61) ausgebildet ist, mit dem Gehäuseelement (61) verbunden zu werden, wobei das Gehäuseelement (61) einen Zulaufkanal für ein Kältemittel und einen Auslaufkanal für das Kältemittel aufweist;
der zweite Strömungskanalanschluss ein Auslassanschluss (15) ist, der in der Mitte eines unteren Flächenbereichs des Ventilhauptkörpers (12) ausgebildet ist und dazu eingerichtet ist, mit dem Auslaufkanal (64) des Gehäuseelements (61) verbunden zu werden, sodass das Kältemittel aus der Ventilkammer (13) abfließen kann;
die Mittelachse (A) des Ventilhauptkörpers (12) derart ausgeführt ist, dass sie mit der Mittelachse (A) des Ventilbefestigungslochs (62) übereinstimmt;
eine Mittelachse (A) des zweiten Strömungskanalanschlusses (15) mit einer Mittelachse (A) des Durchgangslochs (la) übereinstimmt;
ein unterer Teil des Durchgangslochs (la) als Ventilanschluss (16) verwendet wird, und
der Ventilsitz (17) im oberen Endbereich des Ventilanschlusses (16) ausgebildet ist.

2. Das elektrische Antriebsventil nach Anspruch 1, **dadurch gekennzeichnet, dass** eine äußere Umfangsfläche eines oberen Endbereichs des Ventilhauptkörpers (12) ein Paar ebener Bereiche (45a, 45b, 45c und 45d) umfasst, die parallel zur Mittelachse (A) des Ventilhauptkörpers (12) angeordnet sind und sich parallel zueinander erstrecken.

3. Das elektrische Antriebsventil nach Anspruch 4, **dadurch gekennzeichnet, dass**
der Ventilhauptkörper (12) im Seitenflächenbereich des Ventilhauptkörpers (12) zwei Öffnungen umfasst, die mit der Ventilkammer (13) kommunizieren und den ersten Strömungskanalanschluss bilden können;
eine der beiden Öffnungen derart angeordnet ist, dass sie direkt unter einem von dem Paar ebener Bereiche (45a, 45b, 45c und 45d) angeordnet ist; und
die andere der beiden Öffnungen derart angeordnet ist, dass sie direkt unter dem anderen von dem Paar ebener Bereiche (45a, 45b, 45c und 45d) angeordnet ist.

4. Das elektrische Antriebsventil nach Anspruch 2, **dadurch gekennzeichnet, dass** eine äußere Umfangsfläche eines oberen Endbereichs des Ventilhauptkörpers (12) ein weiteres Paar ebener Bereiche (45a, 45b, 45c und 45d) umfasst, die parallel zur Mittelachse (A) des Ventilhauptkörpers (12) angeordnet sind, sich parallel zueinander erstrecken und orthogonal zu dem Paar ebener Bereiche (45a, 45b, 45c und 45d) stehen.

5. Das elektrische Antriebsventil nach Anspruch 4, **dadurch gekennzeichnet, dass**
der Ventilhauptkörper (12) im Seitenflächenbereich des Ventilhauptkörpers (12) vier Öffnungen (4a bis 4d) umfasst, die mit der Ventilkammer (13) kommunizieren können und als erster oder zweiter Strömungskanalanschluss ausgebildet werden können;
eine erste Öffnung unter den vier Öffnungen (4a bis 4d) direkt unter einem von dem Paar ebener Bereiche (45a, 45b, 45c und 45d) angeordnet ist;
eine zweite Öffnung unter den vier Öffnungen (4a bis 4d) direkt unter dem anderen von dem Paar ebener Bereiche (45a, 45b, 45c und 45d) angeordnet ist;
eine dritte Öffnung unter den vier Öffnungen (4a bis 4d) direkt unter einem von dem weiteren Paar ebener Bereiche (45a, 45b, 45c und 45d) angeordnet ist; und
eine vierte Öffnung unter den vier Öffnungen (4a bis 4d) direkt unter dem anderen von dem weiteren Paar ebener Bereiche (45a, 45b, 45c und 45d) angeordnet ist.

6. Das elektrische Antriebsventil nach einem der Ansprüche 1 bis 5, **dadurch gekennzeichnet, dass** das elektrische Antriebsventil ein Pilotantriebsventil ist, das ein Pilotventil umfasst, welches zwischen dem Ventilkörper (18) und dem Aktuator (31) angeordnet ist, und der Aktuator (31) den Ventilkörper (18) über das Pilotventil antreibt.

7. Das elektrische Antriebsventil nach Anspruch 6, **dadurch gekennzeichnet, dass** der erste Strömungskanalanschluss ein Einlassanschluss ist, der im Seitenflächenbereich des Ventilhauptkörpers (12) ausgebildet ist und direkt unter einem von dem Paar ebener Bereiche (45a, 45b, 45c und 45d) angeordnet ist und das Kältemittel in die Ventilkammer (13) einströmen lässt.

8. Das elektrische Antriebsventil nach Anspruch 7, **dadurch gekennzeichnet, dass**
der Ventilhauptkörper (12) im Seitenflächenbereich des Ventilhauptkörpers (12) mindestens zwei Öffnungen umfasst, die mit der Ventilkammer (13) kommunizieren und als erster Strömungskanalanschluss ausgebildet werden können;
eine der beiden Öffnungen direkt unter einem von dem Paar ebener Bereiche (45a, 45b, 45c und 45d) angeordnet ist; und
die andere der beiden Öffnungen direkt unter dem anderen von dem Paar ebener Bereiche (45a, 45b, 45c und 45d) angeordnet ist.

## Revendications

1. Soupape de commande électrique comportant :
un corps principal de soupape (12) qui a une chambre de soupape (13) dans une partie intérieure de celui-ci ;
un premier orifice de canal d'écoulement qui est formé dans le corps principal de soupape (12) et communique avec la chambre de soupape (13) ;
un second orifice de canal d'écoulement qui est formé dans le corps principal de soupape (12) et communique avec la chambre de soupape (13) ;
un orifice de soupape (16) qui a un siège de soupape (17) et est disposé entre le second orifice de canal d'écoulement et la chambre de soupape (13) de telle manière à déboucher dans la chambre de soupape (13) ;
un corps de soupape (18) qui se déplace dans une direction d'un axe central (A) ; et
un actionneur (31) qui entraîne le corps de soupape (18) ;
dans lequel le corps principal de soupape (12) est formé par une matière extrudée creuse en alliage d'aluminium qui a un trou traversant (1a) s'étendant dans une direction axiale de l'axe central (A) ;
**caractérisée en ce que**
la soupape de commande électrique est une soupape de commande électrique de type cartouche configurée pour être fixée à un élément de boîtier (61) en insérant le corps principal de soupape (12) dans un trou de fixation de soupape (62) formé dans l'élément de boîtier (61) qui est pourvu d'un canal d'écoulement d'entrée pour du fluide frigorigène et un canal d'écoulement de sortie pour le fluide frigorigène,
le second orifice de canal d'écoulement est un orifice d'écoulement de sortie (15) qui est formé dans un centre d'une partie de surface inférieure du corps principal de soupape (12) et configuré pour être relié au canal d'écoulement de sortie (64) de l'élément de boîtier (61), permettant au fluide frigorigène de s'écouler à l'extérieur de la chambre de soupape (13),
l'axe central (A) du corps principal de soupape (12) est adapté pour coïncider avec l'axe central (A) du trou de fixation de soupape (62),
un axe central (A) du second orifice de canal d'écoulement (15) est concordant avec un axe central (A) du trou traversant (1a),
une partie inférieure du trou traversant (1a) est utilisée comme orifice de soupape (16), et
le siège de soupape (17) est formé dans une partie d'extrémité supérieure de l'orifice de soupape (16).

2. Soupape de commande électrique selon la revendication 1, **caractérisée en ce qu'**une surface périphérique extérieure d'une partie d'extrémité supérieure du corps principal de soupape (12) est pourvue d'une paire de parties planes (45a, 45b, 45c et 45d) qui sont parallèles à un axe central (A) du corps principal de soupape (12) et s'étendent parallèlement les unes aux autres.

3. Soupape de commande électrique selon la revendication 4, **caractérisée en ce que** le corps principal de soupape (12) est pourvu d'une partie de surface latérale du corps principal de soupape (12) avec deux ouvertures qui sont en communication avec la chambre de soupape (13) et peuvent former le premier orifice de canal d'écoulement,
l'une de ces deux ouvertures est adaptée pour être agencée directement sous une partie de la paire de parties planes (45a, 45b, 45c et 45d), et
**en ce que** l'autre de ces deux ouvertures est adaptée pour être agencée directement sous l'autre partie de la paire de parties planes (45a, 45b, 45c et 45d).

4. Soupape de commande électrique selon la revendication 2, **caractérisée en ce qu'**une surface périphérique extérieure d'une partie d'extrémité supérieure du corps principal de soupape (12) est pourvue de l'autre paire de parties planes (45a, 45b, 45c et 45d) qui sont parallèles à un axe central (A) du corps principal de soupape (12), s'étendent parallèlement les unes aux autres et sont orthogonales à la paire de parties planes (45a, 45b, 45c et 45d).

5. Soupape de commande électrique selon la revendication 4, **caractérisée en ce que** le corps principal de soupape (12) est pourvu d'une partie de surface latérale du corps principal de soupape (12) avec quatre ouvertures (4a à 4d) qui peuvent communiquer avec la chambre de soupape (13) et peuvent être formées comme premier orifice de canal d'écoulement ou second orifice de canal d'écoulement,
une première ouverture parmi ces quatre ouvertures (4a à 4d) est agencée juste en dessous d'une partie d'une paire de parties planes (45a, 45b, 45c et 45d),
une deuxième ouverture parmi ces quatre ouvertures (4a à 4d) est agencée juste en dessous de l'autre partie de la paire de parties planes (45a, 45b, 45c et 45d),
une troisième ouverture parmi ces quatre ouvertures (4a à 4d) est agencée juste en dessous d'une partie de l'autre paire de parties planes (45a, 45b, 45c et 45d), et
une quatrième ouverture parmi ces quatre ouvertures (4a à 4d) est agencée juste en dessous de l'autre partie de l'autre paire de parties planes (45a, 45b, 45c et 45d).

6. Soupape de commande électrique selon l'une quelconque des revendications 1 à 5, **caractérisée en ce que** la soupape d'entraînement électrique est une soupape d'entraînement électrique de type pilote incluant une soupape pilote qui est intercalée entre le corps de soupape (18) et l'actionneur (31), et
l'actionneur (31) entraîne le corps de soupape (18) via la soupape pilote.

7. Soupape de commande électrique selon la revendication 6, **caractérisée en ce que** le premier orifice de canal d'écoulement est un orifice d'écoulement d'entrée qui est formé dans une partie de surface latérale du corps principal de soupape (12) et juste en dessous d'une partie quelconque de la paire de parties planes (45a, 45b, 45c et 45d) et permet au fluide frigorigène de s'écouler dans la chambre de soupape (13).

8. Soupape de commande électrique selon la revendication 7, **caractérisée en ce que** le corps principal de soupape (12) est pourvu d'une partie de surface latérale du corps principal de soupape (12) avec au moins deux ouvertures qui communiquent avec la chambre de soupape (13) et peuvent être formées comme premier orifice de canal d'écoulement,
l'une de ces deux ouvertures est agencée juste en dessous d'une partie de la paire de parties planes (45a, 45b, 45c et 45d), et
l'autre de ces deux ouvertures est agencée juste en dessous de l'autre partie de la paire de portions planes (45a, 45b, 45c et 45d).
